# EUROPÄISCHE PATENTSCHRIFT

(11) **EP 1 902 652 B1**
(45) Veröffentlichungstag und Bekanntmachung des Hinweises auf die Patenterteilung: **28.12.2011**
(21) Anmeldenummer: 07014772.3
(22) Anmeldetag: 27.07.2007
(51) Int. Cl.: A47J 27/62, A47J 37/12, A47B 31/02

(54) **Fondue-Einrichtung**
Fondue arrangement
Dispositif à fondue

(30) Priorität: 08.08.2006 DE 102006036945
(43) Veröffentlichungstag der Anmeldung: 26.03.2008
(73) Patentinhaber: Müller, Detlef, 57410 Gros Rederching (FR)
(72) Erfinder: Müller, Detlef, 57410 Gros Rederching (FR)
(74) Vertreter: Bernhardt, Reinold

(56) Entgegenhaltungen:
- DE-A1- 19 500 896
- DE-A1- 19 828 170
- DE-U1-202006 006 941
- US-A- 3 681 568

## Beschreibung

Die Erfindung betrifft eine Fondue-Einrichtung mit mindestens einem Topf und mindestens einem Heizgerät zur Erhitzung eines Fondue-Mediums und mit einer Steuerung (4) des Heizgerätes derart, dass verschiedene Fondue-Medien jeweils auf eine ihnen entsprechende Betriebstemperatur einregelbar sind.

Fondue-Einrichtungen sind vielfältig bekannt. In der Regel wird der Topf auf eine auf dem Tisch aufgebaute Heizvorrichtung gestellt, die aus einem frei stehenden Gestell und einem darunter befindlichen Heizgerät besteht. Das Heizgerät heizt den Topf gewöhnlich mit einer offenen Ölflamme oder durch Verbrennung einer speziellen Brennpaste o. dgl.. In dem Topf befindet sich ein Fondue-Medium wie Käse, Schokolade, Bouillon oder Öl. Die Temperatur wird von Hand reguliert, indem durch Bewegen eines direkt am Heizelement angeordneten Schiebers die Sauerstoffzufuhr zur offenen Flamme vergrößert oder verkleinert wird. Bekannt sind auch Fondue-Einrichtungen mit einer elektrischen Kochplatte, die eine übliche Drehknopf-Einstellung aufweist.
Käse oder Schokolade werden auf eine Temperatur erhitzt, bei der sie flüssig sind. Mit Hilfe einer Gabel wird ein Nahrungsmittel wie z.B. Brot oder Obst in die Flüssigkeit getaucht und von dieser umhüllt. Das Nahrungsmittel mit der Käse- bzw. Schokoladenumhüllung wird aus dem Topf genommen und verspeist. Bouillon oder Öl werden auf eine Temperatur erhitzt, bei der Nahrungsmittel wie Fisch oder Fleisch in ihnen gegart werden können. Diese Nahrungsmittel werden mit einer Gabel oder einem Sieb solange in das Medium gehalten, bis sie gar sind, und dann aus dem Topf genommen.

Das Regeln der Temperatur von Hand ist grob und fehlerbehaftet. Bei den Heizgeräten mit offener Flamme besteht weder eine Heizleistungs- noch eine Temperaturkontrolle und erst recht keine Regelung. Bei den Kochplatten mit Drehknopf hat man zwar meist 6 verschiedene Einstellungen. Da sich aber kaum eine davon mit der gewünschten Temperatur deckt, muss man trotzdem von Hand hin- und herschalten.

Eine elektrische Fondue-Einrichtung mit genauerer Regelung ist aus der US-PS 3681586 bekannt, von der oben ausgegangen wird. Diese Fondue-Einrichtung weist ein Steuergerät auf, an dem mittels eines kleinen Drehknopfes beliebige Temperaturen einstellbar sind, die dann durch eine Thermostatregelung gehalten werden.

Der Erfindung liegt die Aufgabe zugrunde, Fondue-Einrichtungen einfacher und sicherer handhabbar zu machen.

Dies wird erfindungsgemäß dadurch gelöst, dass in der Steuerung die Betriebstemperaturen für verschiedene Fondue-Medien fest vorgegeben und wählbar sind.

Durch die Steuerung der erfindungsgemäßen Fondue-Einrichtung wird das Heizgerät, ohne dass der Benutzer nach der richtigen Temperatur fragen und sie zahlenmäßig einstellen muss, selbsttätig so gesteuert, dass das Fondue-Medium auf eine ihm entsprechende Temperatur geheizt wird. Dabei ist außerdem gesichert, dass das Fondue-Medium auf seine optimale Betriebstemperatur gebracht wird und diese auch genau hält. Auch das Einstellen des erwähnten kleinen Drehknopfes ist demgegenüber nicht so genau möglich, dass ungeachtet der Thermostatregelung nicht öfter hin und hergestellt werden muss.

Beispielsweise für jedes der obengenannten Fondue-Medien ist eine bestimmte Betriebstemperatur in der Steuerung gespeichert und vorgegeben. Der Benutzer wählt nur das Fondue-Medium aus und die Steuerung regelt die entsprechende Temperatur ein.
Am Topf oder in der Nähe des Topfes ist ein Temperaturfühler angeordnet, der stets die Temperatur des Mediums kontrolliert.
Zur Zubereitung derjenigen Speisen, die mit einer bestimmten Dauer gegart werden müssen, kann ferner ein Zeitschalter mit Signalvorrichtung vorgesehen sein, der manuell eingestellt werden kann.

Vorzugsweise sind die Betriebstemperaturen über den Fondue-Medien zugeordnete Erkennungsmerkmale einstellbar und die Fondue-Einrichtung weist Mittel zur Erkennung (7) der Erkennungsmerkmale und entsprechenden Auswahl der Betriebstemperatur auf, wobei zweckmäßig für verschiedene Fondue-Medien unterschiedliche Töpfe vorgesehen sind. Diese Ausgestaltung ist insbesondere für Restaurants vorgesehen.
Ein gesondertes Einstellen des Heizgerätes ist hier nicht nötig. Durch das Einfüllen der jeweiligen Fondue-Medien in für sie vorgesehene Töpfe, ist zugleich die Betriebstemperatur festgelegt. Die an den Töpfen angeordnete Merkmale werden von der Fondue-Einrichtung erkannt und dem betreffenden Fondue-Medium zugeordnet, sobalddie Töpfe auf das Heizgerät gesetzt werden.

Zweckmäßig sind als Erkennungsmerkmale Zeichengebungen, Farben, Farbanordnungen, Barcodes, die Topfform oder -größe, oder an den Töpfen zusätzliche angebrachte Teile oder Gestaltungen, vorzugsweise Nocken, Stifte oder Formveränderungen, vorgesehen. Auch eine Erkennung mittels Funktechnik, z.B. durch Kennzeichnung mit RFID-Chips, ist vorstellbar.

In einer anderen Ausgestaltung ist die in der Steuerung fest vorgegebene Betriebstemperatur in einer kleinen Variationsbreite manuell veränderbar.
Der Benutzer kann, falls er zum Beispiel ein flüssigeres oder zäheres Fondue-Medium bevorzugt oder die Garzeit für Fleisch oder Fisch verlängern oder verkürzen will, die Temperatur in einem Bereich von z.B. ± 5° C um die festgelegte Temperatur verändern.

Zweckmäßig ist das Heizgerät eine Induktionsheizung.
Mit Induktionsheizung ist ein sehr schnelles Erhitzen, insbesondere schneller als mit offenen Flammen oder Elektrokochplatten, möglich. Der Topf selbst wird erhitzt und gibt seine Wärme and das Fondue-Medium ab. Die Heizleistung ist sehr gut kontrollierbar und es ist eine sichere Methode, besonders im Vergleich zur Erhitzung mit offener Flamme.

In einer weiteren Ausgestaltung ist an einer Fondue-Einrichtung eine Mehrzahl von Heizgeräten und Töpfen für eine Nutzung durch eine Mehrzahl von Personen vorgesehen, dies wiederum insbesondere im Rahmen einer Restaurant-Ausstattung. Die verschiedenen Fondue-Stellen mit Heizgerät und Topf können gleichzeitig genutzt werden. In geselliger Runde hat so jeder Benutzer die volle Auswahl an Fondue-Medien und -speisen, und die Runde muss sich nicht auf eine einzige Fondue-Art festlegen.

In einer weiteren Ausgestaltung ist neben dem Platz für den Topf eine Abzugsvorrichtung angeordnet.

Die Dämpfe, die von den heißen Fondue-Medien aufsteigen, werden direkt abgesaugt. Die Luft im Raum bleibt sauber. Dies ist besonders vorteilhaft, wenn sich viele Fondue-Stellen oder Fondue-Einheiten in einem Raum befinden.

In einer Weiterbildung der Erfindung ist die Fondue-Einrichtung an einem Tisch angeordnet, wobei der Topf in diesen einsetzbar ist und das Heizgerät, die Mittel zur Erkennung der Töpfe, die Steuerung und Teile der Abzugsvorrichtung unter der Tischplatte angeordnet sind.
In dieser Anordnung sieht der Benutzer nur die Teile der Fondue-Einrichtung, die für die Bedienung relevant sind. Er hat den in den Tisch eingelassenen Topf mit einem neben ihm angeordneten Abzug und eventuell ein Bedienelement für die individuelle manuelle Steuerung vor sich. Das unter der Tischplatte angebrachte Heizgerät für den Topf ist für den Benutzer nicht sichtbar, das gleiche gilt für die Mittel zur Erkennung der Töpfe. Die restliche Fläche der Tischplatte kann wie gewöhnlich zum Abstellen eines Tellers und der Nahrungsmittel oder eines Tablettes verwendet werden.
Dadurch, dass der Fondue-Topf, vorzugsweise bis zum Rand, in den Tisch hineingestellt werden muss, weil das Fondue-Medium sonst nicht aufgeheizt werden kann, wird die Gefahr, dass der Fondue-Topf mit dem heißen Fondue-Medium durch unachtsames Anstoßen umkippt, beseitigt und somit eine Verbrennung oder Verbrühung eines Benutzers ausgeschlossen.

Zweckmäßig weist der Tisch Mittel zur Feststellung auf, ob die Fondue-Einrichtung benutzt wird, und im Falle der Nichtbenutzung schaltet die Steuerung das Heizgerät nach einer bestimmten Zeit ab, wenn der letzte Benutzer es abzuschalten versäumt hat.
Die Mittel können Lichtschranken oder handelsübliche Bewegungsmelder sein.

Die Zeichnungen geben Ausführungsbeispiele der Erfindung wieder.
- Fig. 1: Schrägansicht einer Fondue-Einrichtung,
- Fig. 2: Seitenansicht einer Fondue-Einrichtung,
- Fig. 3: eine andere Seitenansicht einer Fondue-Einrichtung, und
- Fig. 4: Draufsicht auf eine Fondue-Einrichtung.

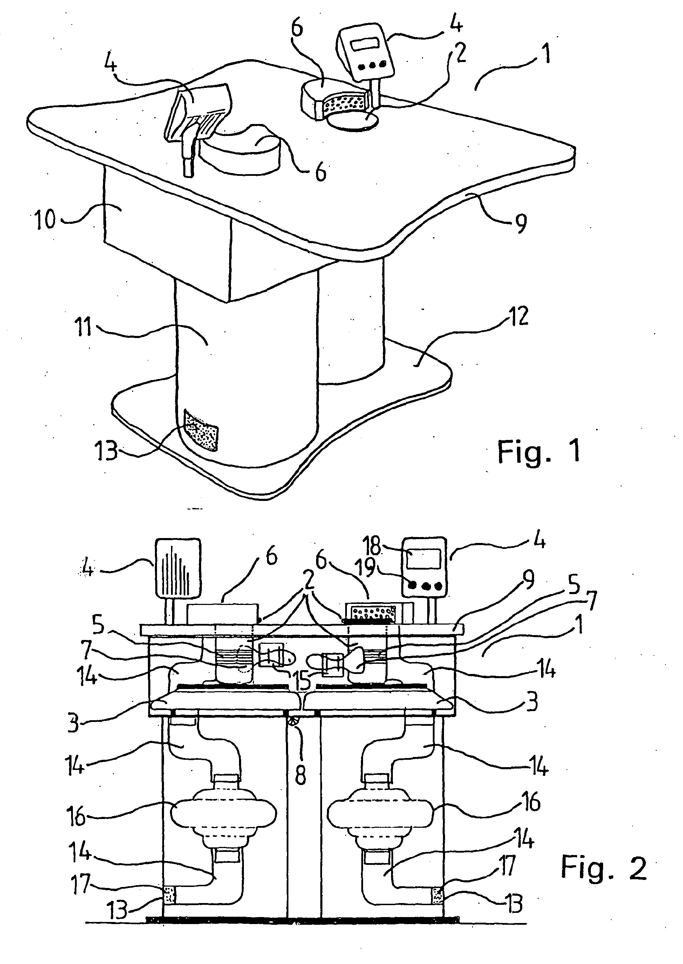

In Fig. 1 ist eine an einem Tisch 1 angeordnete Fondue-Einrichtung gezeigt. Der Tisch besteht aus einer Tischplatte 9, einem Gehäuse 10, zwei Trageelementen 11 und einem Tischfuß 12. Der Tisch ist für eine Benutzung mit zwei Personen vorgesehen.

Auf der Tischplatte befinden sich zwei Bedienelemente mit Steuerung 4, zwei Abzugsvorrichtungen 6 und in den Tisch eingelassen sind zwei Töpfe 2. In dem Gehäuse 10 sind die Töpfe 2, zwei Heizgeräte 3, als Mittel zur Erkennung der Töpfe zwei Scanner 7 und Teile der Abzugsvorrichtung 6,14 angeordnet. In den Trageelementen 11 befinden sich weitere Teile der Abzugsvorrichtung wie Abzugsrohre 14 zwei Abzugsgebläse 16 und Filter 17. Außerdem ist in jedem der Tragelemente 11 eine Abzugsöffnung 13 angeordnet, an die die Abzugsvorrichtung angeschlossen ist.

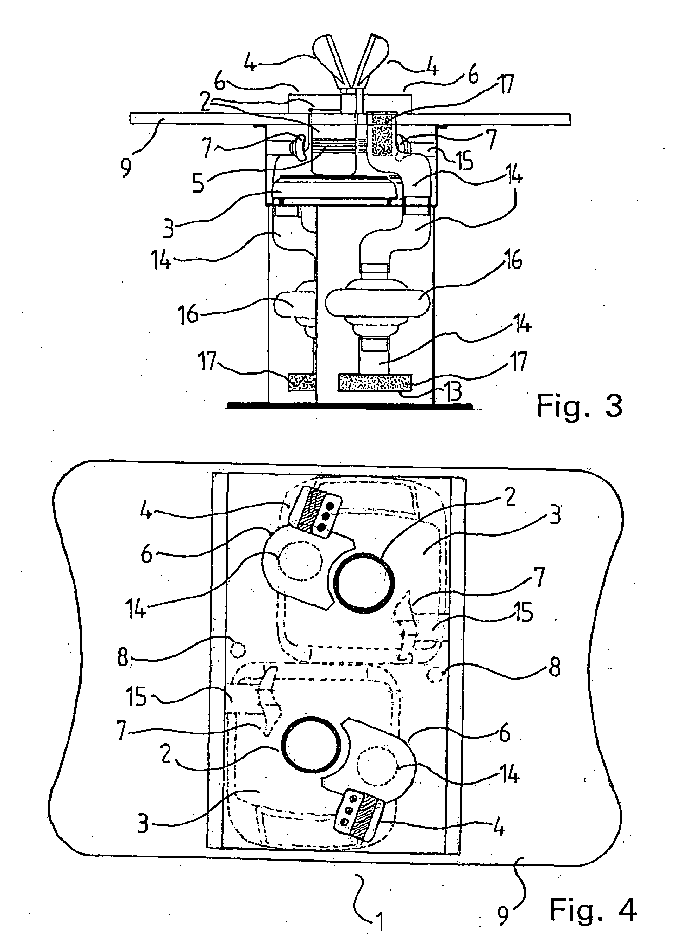

In Fig. 2 und 3 ist die Fondue-Einrichtung in zwei verschiedenen Seitenansichten dargestellt. Es ist gezeigt, wie die Töpfe 2 in die Tischplatte 9 eingelassen sind und auf den Heizgeräten 3 stehen. Die Scanner 15, die die als Erkennungsmerkmale der Töpfe 2 dienenden Barcodes 5 lesen, sind seitlich neben den Töpfen angeordnet. Die Abzugsrohre 14 sind an die direkt neben dem Topf angeordneten Abzugsvorrichtungen 6 und an Abzugsgebläse 16 angeschlossen, die die Dämpfe der heißen Fondue-Medien nach unten absaugen. Zur Säuberung der Luft sind an der Tischplatte in den Rohren und vor der Abzugsöffnungen 13 Filter 17 angeordnet. Aus den Abzugsöffnungen 13 wird die gesäuberte Luft wieder ausgeblasen.

In Fig. 4 ist dargestellt, wie die beiden Fondue-Stellen symmetrisch zueinander angeordnet sind. Der Topf 2 ist über der Mitte des Heizgerätes 3 und auf dem Heizgerät 3 angeordnet. Die Scanner 7 sind mittels einer Scannerhalterung 15 befestigt. Außerdem ist unter der Tischplatte 9 auf jeder Benutzerseite ein Bewegungsmelder 8 angebracht.

Im folgenden wird die Funktionsweise der Fondue-Einrichtung beschrieben. Der Benutzer setzt einen mit einem Fondue-Medium gefüllten Topf 2 in die dafür vorgesehene Aussparung in der Tischplatte 9 ein. Die an dem Topf 2 angebrachten Barcodes als Erkennungsmerkmale 5 enthalten eine Information über das im Topf befindliche Fondue-Medium. Diese Information wird mit Hilfe des Scanners 7 gelesen und an die Steuerung 4 übermittelt.
Die Steuerung greift auf eine Datenbank zurück, in der Heizprogramme für die unterschiedlichen Fondue-Medien gespeichert sind und aktiviert das Heizgerät 3. Die Steuerung 4 aktiviert das Heizgerät 3 nur, wenn ein zur Fondue-Einrichtung passender Topf 2 eingesetzt wird. Die Steuerung kontrolliert die Heizleistung und heizt mit dem Heizgerät 3 das Fondue-Medium automatisch auf die ihm entsprechende Temperatur. Schokolade wird auf die Betriebstemperatur von 60° C, Käse auf 65°C, Brühe auf 95° C und Öl auf 180° C geheizt. Die Fondue-Mediums-Temperatur wird mit einem Temperaturfühler, z.B. einem Thermoelement oder einer kontaktlosen Temperaturmessung am Boden und/oder an der Seitenwand der Töpfe 2 kontrolliert und an die Steuerung übermittelt.
Die Heizgeräte sind Induktionsheizgeräte, die eine schnelle Erhitzung des Fondue-Mediums in etwa 2-3 Minuten ermöglichen. Mit den Bedienelementen mit Steuerung 4 kann die Temperatur in einem Rahmen von ± 5° C reguliert werden, und für die Zubereitung von Nahrungsmitteln mit bestimmten Garzeiten ist eine Zeitgabefunktion vorgesehen, die mit dem Bedienelement mit Steuerung 4 eingestellt werden kann.
Das Bedienelement 4 weist ein Display 18 und mehrere Bedientasten 19 auf. Über das Display wird dem Benutzer z.B. mitgeteilt, ob das Fondue-Medium die Betriebstemperatur erreicht hat. Die Tasten 19 dienen z.B. zur Wahl der Bedienungssprache oder der Fondue-Medien, zum Nachregeln der Temperatur oder zum Ein- oder Ausschalten.
Sobald das Heizgerät beginnt, das Fondue-Medium auf Betriebstemperatur zu heizen, schaltet die Steuerung das Abzugsgebläse 16 ein. Die Dämpfe des Fondue-Mediums werden durch die Abzugsvorrichtung 6 abgesaugt und dort durch einen ersten Filter 17 abgezogen. Danach werden sie durch die Abzugsrohre 14 nach unten gesaugt und durch die Abzugsöffnung, vor der ein Filter 17 angeordnet ist, ausgeblasen. Das Bedienelement 4 mit Steuerung kann mit der Abzugsvorrichtung 6 ein Teil bilden.
Außerdem ist unter der Tischplatte ein Bewegungsmelder 8 angeordnet, der überwacht, ob sich am Tisch ein Benutzer befindet. Wenn der Bewegungsmelder über eine bestimmte Dauer keine Bewegung detektiert, wird die Fondue-Einrichtung automatisch ausgeschaltet.

## Patentansprüche

1. Fondue-Einrichtung mit mindestens einem Topf (2), mit mindestens einem Heizgerät (3) zur Erhitzung eines Fondue-Mediums und mit einer Steuerung (4) des Heizgerätes derart, dass verschiedene Fondue-Medien jeweils auf eine ihnen entsprechende Betriebstemperatur einregelbar sind,
**dadurch gekennzeichnet,**
**dass** in der Steuerung (4) die Betriebstemperaturen für verschiedene Fondue-Medien fest vorgegeben und wählbar sind.

2. Fondue-Einrichtung nach Anspruch 1,
**dadurch gekennzeichnet,**
**dass** die Betriebstemperaturen über den Fondue-Medien zugeordnete Erkennungsmerkmale einstellbar sind und die Fondue-Einrichtung Mittel zur Erkennung (7) der Erkennungsmerkmale und entsprechenden Auswahl der Betriebstemperatur aufweist.

3. Fondue-Einrichtung nach Anspruch 2,
**dadurch gekennzeichnet,**
**dass** für verschiedene Fondue-Medien unterschiedliche Töpfe (2) vorgesehen sind, die die Erkennungsmerkmale (5) aufweisen.

4. Fondue-Einrichtung nach Anspruch 2 oder 3,
**dadurch gekennzeichnet,**
**dass** als Erkennungsmerkmale (5) Zeichengebungen, Farben, Farbanordnungen, Barcodes, die Topfform oder -größe, oder an den Töpfen zusätzliche angebrachte Teile oder Gestaltungen, vorzugsweise Nocken, Stifte oder Formveränderungen, vorgesehen sind.

5. Fondue-Einrichtung nach einem der Ansprüche 1 bis 4,
**dadurch gekennzeichnet,**
**dass** die in der Steuerung (4) vorgegebene Betriebstemperatur in einer kleinen Variationsbreite manuell veränderbar ist.

6. Fondue-Einrichtung nach einem der Ansprüche 1 bis 4,
**dadurch gekennzeichnet,**
**dass** das Heizgerät (3) eine Induktionsheizung ist.

7. Fondue-Einrichtung nach einem der Ansprüche 1 bis 6,
**dadurch gekennzeichnet,**
**dass** eine Mehrzahl von Heizgeräten (3) und Töpfen (2) für eine Nutzung durch eine Mehrzahl von Personen vorgesehen ist.

8. Fondue-Einrichtung nach einem der Ansprüche 1 bis 7,
**dadurch gekennzeichnet,**
**dass** neben dem Platz für den Topf (2) eine Abzugsvorrichtung (6) angeordnet ist.

9. Fondue-Einrichtung nach einem der Ansprüche 1 bis 8,
**dadurch gekennzeichnet,**
**dass** die Fondue-Einrichtung an einem Tisch (1) angeordnet ist, wobei der Topf (2) in diesen einsetzbar ist und das Heizgerät (3) die Mittel zur Erkennung (7) der Erkennungsmerkmale, die Steuerung (4) und Teile der Abzugsvorrichtung (6) unter der Tischplatte (9) angeordnet sind.

10. Fondue-Einrichtung nach Anspruch 9,
**dadurch gekennzeichnet,**
**dass** der Tisch (1) Mittel zur Feststellung, ob die Fondue-Einrichtung benutzt wird, aufweist und die Steuerung (4) das Heizgerät (3) im Falle der Nichtbenutzung nach einer bestimmten Zeit abschaltet.

## Claims

1. Fondue device having at least one pot (2), having at least one heating appliance (3) for heating a fondue medium and having a control means (4) for controlling the heating appliance such that different fondue media can be adjusted to an operating temperature that is appropriate for them,
**characterized**
**in that** the operating temperatures for different fondue media are fixedly predetermined in the control means (4) and can be selected.

2. Fondue device according to Claim 1,
**characterized**
**in that** the operating temperatures can be set via identification features assigned to the fondue media and the fondue device has means (7) for identifying the identification features and for appropriate selection of the operating temperature.

3. Fondue device according to Claim 2,
**characterized**
**in that** different pots (2) are provided for different fondue media, said pots (2) having the identification features (5).

4. Fondue device according to Claim 2 or 3,
**characterized**
**in that** characters, colours, colour arrangements, barcodes, the shape or size of the pot, or additional parts or designs attached to the pots, preferable protuberances, pins or changes in shape, are provided as identification features (5).

5. Fondue device according to one of Claims 1 to 4,
**characterized**
**in that** the operating temperature predetermined in the control means (4) can be changed manually within a small range of variation.

6. Fondue device according to one of Claims 1 to 4,
**characterized**
**in that** the heating appliance (3) is an induction heater.

7. Fondue device according to one of Claims 1 to 6,
**characterized**
**in that** a plurality of heating appliances (3) and pots (3) are provided for use by a plurality of persons.

8. Fondue device according to one of Claims 1 to 7,
**characterized**
**in that** an extraction arrangement (6) is arranged next to the space for the pot (2).

9. Fondue device according to one of Claims 1 to 8,
**characterized**
**in that** the fondue device is arranged on a table (1), wherein the pot (2) can be inserted into said table (1) and the heating appliance (3), the means (7) for identifying the identification features, the control means (4) and parts of the extraction arrangement (6) are arranged under the table top (9).

10. Fondue device according to Claim 9,
**characterized**
**in that** the table (1) has means for detecting whether the fondue device is being used, and the control means (4) switches off the heating appliance (3) after a particular time in the event of non-use.

## Revendications

1. Appareil à fondue comprenant au moins une marmite (2) avec au moins un dispositif chauffant (3) pour chauffer un milieu à fondue, et avec une commande (4) du dispositif chauffant de telle manière que différents milieux à fondue peuvent être régulés respectivement à une température de service correspondance,
**caractérisé en ce que**
les températures de service pour différents milieux à fondue sont fermement prédéterminés et susceptibles d'être sélectionnées dans la commande (4).

2. Appareil à fondue selon la revendication 1,
**caractérisé en ce que** les températures de service sont réglables au moyen de caractéristiques de reconnaissance associées aux milieux à fondue, et l'appareil à fondue comprend des moyens de reconnaissance (7) pour reconnaître les caractéristiques de reconnaissance et pour effectuer un choix correspondant de la température de service.

3. Appareil à fondue selon la revendication 2,
**caractérisé en ce que** pour différents milieux à fondue il est prévu différentes marmites (2) qui comportent les caractéristiques de reconnaissance (5).

4. Appareil à fondue selon la revendication 2 ou 3,
**caractérisé en ce qu'**il est prévu à titre de caractéristiques de reconnaissance (5) des graphismes, des couleurs, des agencements de couleurs, des codes à barres, la forme ou la taille de la marmite, ou des pièces ou des conformations rapportées additionnellement sur les marmites, de préférence des cames, des tiges ou des modifications de forme.

5. Appareil à fondue selon l'une des revendications 1 à 4,
**caractérisé en ce que** la température de service prédéterminé dans la commande (4) est modifiable manuellement dans une faible largeur de variation.

6. Appareil à fondue selon l'une des revendications 1 à 4,
**caractérisé en ce que** le dispositif chauffant (3) est un chauffage à induction.

7. Appareil à fondue selon l'une des revendications 1 à 6,
**caractérisé en ce qu'**il est prévu une pluralité de dispositifs chauffants (3) et de marmites (2) pour une utilisation par une pluralité de personnes.

8. Appareil à fondue selon l'une des revendications 1 à 7,
**caractérisé en ce qu'**un dispositif d'extraction (6) est agencé à côté de l'emplacement pour la marmite (2).

9. Appareil à fondue selon l'une des revendications 1 à 8,
**caractérisé en ce que** l'appareil à fondue est agencé sur une table (1), la marmite (2) pouvant être insérée dans celle-ci, et le dispositif chauffant (3), les moyens de reconnaissance (7) pour les caractéristiques de reconnaissance, la commande (4), et des parties du dispositif d'extraction (6) sont agencés au-dessous du plateau de table (9).

10. Appareil à fondue selon la revendication 9,
**caractérisé en ce que** la table (1) comprend des moyens pour constater si l'appareil à fondue est utilisé, et en cas de non d'utilisation, la commande (4) arrête le dispositif chauffant (3) auprès un temps déterminé.
